# EUROPÄISCHE PATENTSCHRIFT

(11) **EP 0 743 137 B1**
(45) Veröffentlichungstag und Bekanntmachung des Hinweises auf die Patenterteilung: **30.07.1997**
(21) Anmeldenummer: 95107454.1
(22) Anmeldetag: 17.05.1995
(51) Int. Cl.: B23Q 1/01, B23Q 37/00

(54) **Bearbeitungsmaschine**
Processing machine
Machine d'usinage

(43) Veröffentlichungstag der Anmeldung: 20.11.1996
(73) Patentinhaber: SBR MASCHINEN-HANDELSGESELLSCHAFT MBH & CO. KG, D-32051 Herford (DE)
(72) Erfinder: Rottmann, Manfred, D-32120 Hiddenhausen (DE)
(74) Vertreter: Gramm, Werner, Prof., Dipl.-Ing.

(56) Entgegenhaltungen:
- WO-A-89/11375
- DE-A- 3 615 978
- DE-A- 3 732 559
- DE-A- 4 212 178
- FR-A- 2 249 740

## Beschreibung

Die Erfindung betrifft Holzbearbeitungsmaschine zur spanenden Bearbeitung insbesondere plattenförmiger Werkstücke, mit einem Rahmenständer in Form einer Hüllkörperkonstruktion, die als selbsttragendes Fachwerk ausgebildet ist und eine Bearbeitungszelle bzw. einen Arbeitsraum komplett umschließt, Maschinenbetten und -ständer, Führungs- und Transportsysteme, Bearbeitungsstationen und dergleichen aufnimmt und hierfür Befestigungsflächen und -bohrungen aufweist, wobei der Rahmenständer eine stirnseitige Öffnung für einen Arbeitstisch oder ein plattenförmiges Werkstück, eine allseitige Verkleidung mit Schallschutzelementen, Sichtfenster zur produktionsüberwachung und/oder Türen zur Durchführung eines Werkzeugwechsels, von Servicearbeiten oder dergleichen sowie Absaugkanäle aufweist.

Insbesondere zur Bearbeitung von Holzwerkstoffen sind Bearbeitungszentren bekannt, die zum Beispiel ein bewegliches oder fest angeordnetes Portal in Verbindung mit einem fest angeordneten oder aber beweglichen Arbeitstisch umfassen. Bekannt sind ferner Bohrautomaten, Endprofiler, Doppelendprofiler, Plattenaufteilsägen, Diagonalsägen, Profilierautomaten, Besäum- und Aufteilsägen, Vielblattsägen und dergleichen. Alle diese Maschinen bestehen aus zahlreichen Einzelkomponenten wie zum Beispiel Maschinenbetten, Maschinenständer, Arbeitstischen, Portalen, Führungsträgern, Schaltschränken, Einzelabsaughauben, einem Lärmschutzhaus und dergleichen. Alle diese Einzelbaugruppen werden im Werk zusammengebaut, zum Versand mehr oder weniger demontiert und beim Anwender in aufwendiger Weise wieder montiert, ausgerichtet, elektrisch verdrahtet und dergleichen. Die miteinander zu verbindenden Flächen der einzelnen Baugruppen erfordern aufwendige mechanische Bearbeitungen sowie Bohrungen. Bei diesem Maschinenkonzept ist nur eine Teilkapselung an der Maschine möglich; seitlich ist nur eine bedingte Lärmminderung gegeben, so daß aufwendige Lärmschutzhäuser um die Maschine herum gebaut werden müssen; eine Staubemission läßt sich nicht mit hinreichender Sicherheit verhindern.

Die eingangs beschriebene Holzbearbeitungsmaschine läßt sich der FR-A-2249740 entnehmen. Diese Vorveröffentlichung offenbart eine Hobelmaschine, die sich aus mehreren selbständigen Maschineneinheiten zusammensetzt, die in jeweils angepaßte, fachartig ausgebildete Aufnahmeräume innerhalb der Hüllkörperkonstruktion eingesetzt und jeweils für sich als selbständige Einheit ausbaubar sind. Getragen werden die Maschinenkomponenten in erster Linie von einer kassettenförmig ausgebildeten Bodengruppe, die zugleich als Palette dient, auf der lotrechte, einen oberen Querträger tragende Ständer befestigt sind, die die Hüllkörperkonstruktion bilden. Die Ausbildung dient dazu, den Ein- und Ausbau aller betriebswichtigen Teile entweder als große Einheiten oder als Untereinheiten zu erleichtern.

Die DE 37 32 559 A1 offenbart eine Fertigungseinheit mit zumindest einer Werkzeugmaschine und einer Ladeeinrichtung, die ein über die Werkzeugmaschine greifendes Portal aufweist, auf dem sie verfahrbar angeordnet ist. Die Werkzeugmaschine ist auf einen Grundrahmen geschraubt, an dessen vier Ecken Pfosten befestigt sind, die an ihren oberen Enden über Quer- und Längsträger miteinander verbunden sind. Dabei bildet der eine Längsträger zugleich die Laufschiene für Laufwagen der Ladeeinrichtung. Der Grundrahmen kann durch Quer- oder Längsträger in rasterartige Felder unterteilt sein. Hierdurch werden aus der Werkzeugmaschine und der Ladeeinrichtung eine transportable Einheit, die als Ganzes transportiert und aufgestellt werden kann. Dadurch kann die genaue Ausrichtung der Werkzeugmaschinen in Bezug auf die Ladeeinrichtung schon bei der Montage der Fertigungseinheit vorgenommen werden. Sie bleibt beim Transport erhalten, so daß am Aufstellungsort keine Aufrichtarbeiten erforderlich werden. Das Traggestell stellt überdies einen Container dar, der beim Transport die Werkzeugmaschine vor Beschädigung schützt. Da die Werkzeugmaschine zur spanenden Metallbearbeitung dient, treten Lärm und Staubemission nicht in vergleichbarem Umfang auf wie bei Holzbearbeitungsmaschinen. Im übrigen läßt sich dieser Vorveröffentlichung nur die Lehre entnehmen, die dem Stand der Technik zuzuzählende Werkzeugmaschine auf einen Grundrahmen zu schrauben, der zugleich auch als Grundrahmen bzw. Träger für eine die Werkzeugmaschine übergreifende Ladeeinreichtung dient, die als solche ebenfalls üblicher Bauart ist.

Der Erfindung liegt die Aufgabe zugrunde, durch ein anderes Baukonzept die den herkömmlich aufgebauten Maschinen anhaftenden Nachteile weitgehend zu vermeiden.

Diese Aufgabe wird gemäß der Erfindung durch folgende Merkmale gelöst:
a) die Hüllkörperkonstruktion ist als tragendes Maschinengerüst ausgebildet;
b) es ist eine Schallschutzschleuse zum Verschließen der stirnseitigen Öffnung vorgesehen;
c) die Absaugkanäle sind in den Rahmenständer integriert;
d) der Rahmenständer weist Zuluft- und Absauganschlüsse auf.

Das neuartige Konstruktionsprinzip ist darin zu sehen, daß das selbsttragende Fachwerk zugleich als tragendes Maschinengerüst ausgebildet ist und somit einen integralen Bestandteil der Holzbearbeitungsmaschine selbst bildet.

Dabei ist es zweckmäßig, wenn der Rahmenständer als Schweißkonstruktion in Hohlkörperbauweise ausgebildet ist. Dabei kann die den Rahmenständer bildende Fachwerkkonstruktion aus Hohlprofilen bestehen. Erreicht wird dadurch ein verbindungssteifer und schwingungsabsorbierender Rahmenständer, wobei in den Hohlprofilen Versorgungsleitungen für Elektrik, Pneumatik oder dergleichen verlegt werden können.

Der erfindungsgemäße, kompakt ausgebildete Rahmenständer läßt sich nach dem Baukastenprinzip den unterschiedlichen Aufgabenstellungen und Funktionen der Maschinen und Anlagen anpassen. Aufwendige spanende Bearbeitung von Montageflächen kann weitentfallen. Die Befestigungsflächen und -bohrungen sind vorzugsweise nahe den Schweißknotenpunkten des Rahmenständers angeordnet, so daß sich insgesamt eine verbindungssteife Konstruktion ergibt. Eine Demontage von Bauteilen beim Hersteller entfällt ebenso wie die Remontage beim Anwender. Der allseits verkleidete Rahmenständer läßt sich ohne Bodenbefestigung auf körperschall-gedämpften Fundamentplatten aufstellen.

Bei größeren Anlagen mit mehreren Bearbeitungszellen lassen sich mehrere Rahmenständer miteinander verschrauben.

Durch das erfindungsgemäße Rahmenkonzept lassen sich die Maschinenkomponenten, die mechanische Bearbeitung, der Montageaufwand, der Demontageaufwand für den Transport, die Transportkosten sowie die Kundenmontage reduzieren. Die Stabilität des Grundmaschinenkörpers wird erhöht. Der erfindungsgemäße Rahmenständer ist zur Aufnahme von statischen und dynamischen Beanspruchungen geeignet. Die Grenzwerte für Lärm- und Staubemission lassen sich problemlos einhalten bzw. unterschreiten. Auch der Energiebedarf läßt sich durch eine Abluftrückführung reduzieren. Der Werkzeugwechsel wird in einem arbeitsgerechten Raum vorgenommen. Der Maschinenkörper erhält eine eindeutige klare geometrische Quader-Form mit ebenen Flächen und geradlinigen Konturen. Insgesamt läßt sich mit dem neuen Konstruktionskonzept ein humaner Arbeitsplatz schaffen, wobei zugleich auch noch das Preis-Leistungsverhältnis verbessert wird.

Weitere Merkmale der Erfindung sind Gegenstand der Unteransprüche und werden in Verbindung mit weiteren Vorteilen der Erfindung anhand von Ausführungsbeispielen näher erläutert.

In der Zeichnung sind einige als Beispiel dienende Ausführungsformen der Erfindung dargestellt. Es zeigen:
- Figur 1 -: einen Längsschnitt durch ein einen Plattenaufteilautomaten umschließendes Bearbeitungszentrum;
- Figur 2 -: einen Querschnitt durch die Darstellung gemäß Figur 1;
- Figur 3 -: die Vorderansicht der Darstellung gemäß Figur 1;
- Figur 4 -: die rechte Stirnansicht der Darstellung gemäß Figur 1;
- Figur 5 -: die Rückansicht der Darstellung gemäß Figur 1;
- Figur 6 -: die linke Stirnansicht der Darstellung gemäß Figur 1;
- Figur 7 -: in schaubildlicher Darstellung den Rahmenständer für das Bearbeitungszentrum gemäß den Figuren 1 bis 6;
- Figur 8 -: in einer Darstellung gemäß Figur 1 ein einen Doppelendprofiler umschließendes Bearbeitungszentrum;
- Figur 9 -: einen Querschnitt durch die Darstellung gemäß Figur 8;
- Figur 10 -: die Vorderansicht der Darstellung gemäß Figur 8;
- Figur 11 -: die rechte Stirnansicht der Darstellung gemäß Figur 8;
- Figur 12 -: in einer Darstellung gemäß Figur 7 den Rahmenständer für das Bearbeitungszentrum gemäß den Figuren 8 bis 11;
- Figur 13 -: in einer Darstellung gemäß Figur 7 einen Rahmenständer für einen Kehl - bzw. Profilierautomaten;
- Figur 14 -: in einer Darstellung gemäß Figur 13 einen Rahmenständer für einen Plattenaufteilautomaten und
- Figur 15 -: den Rahmenständer gemäß Figur 14 verbunden mit zwei weiteren Rahmenständern.

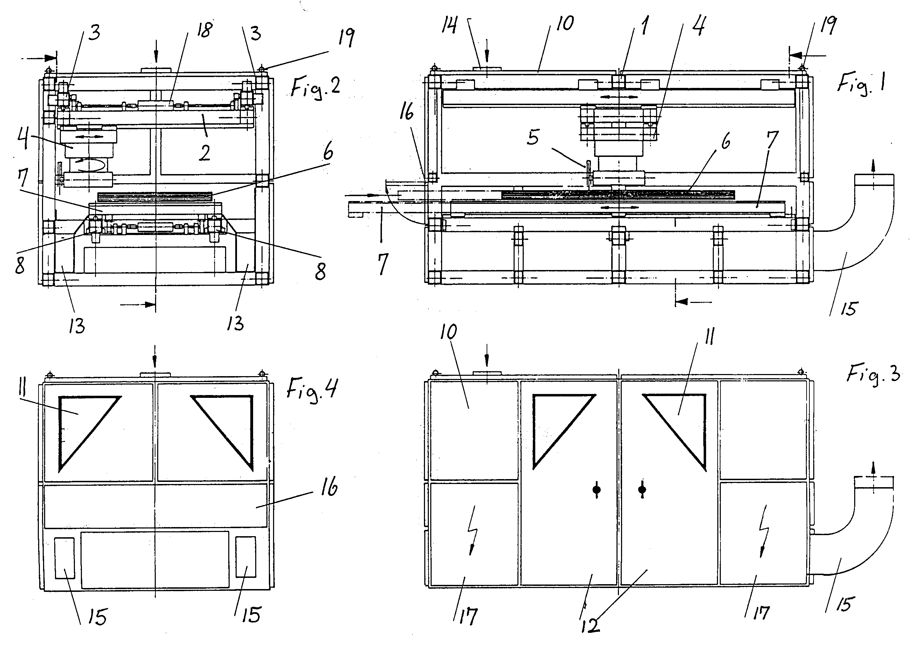

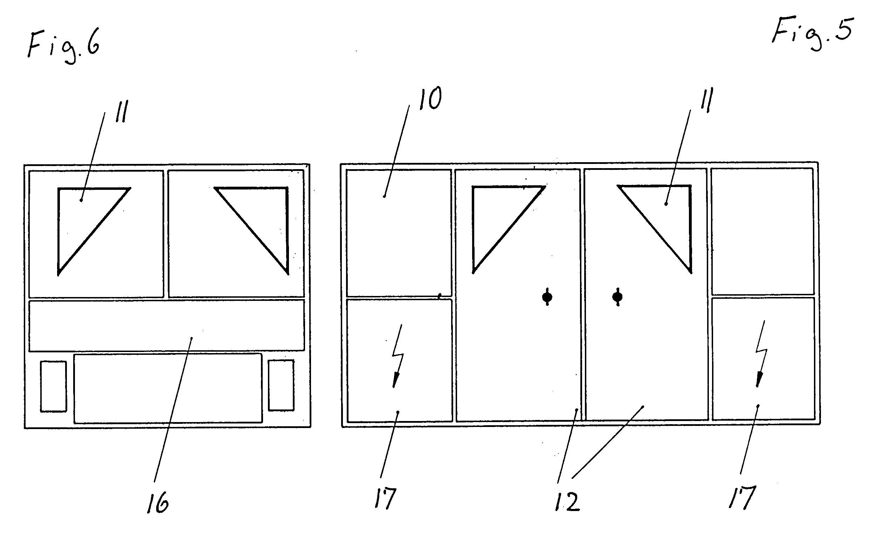

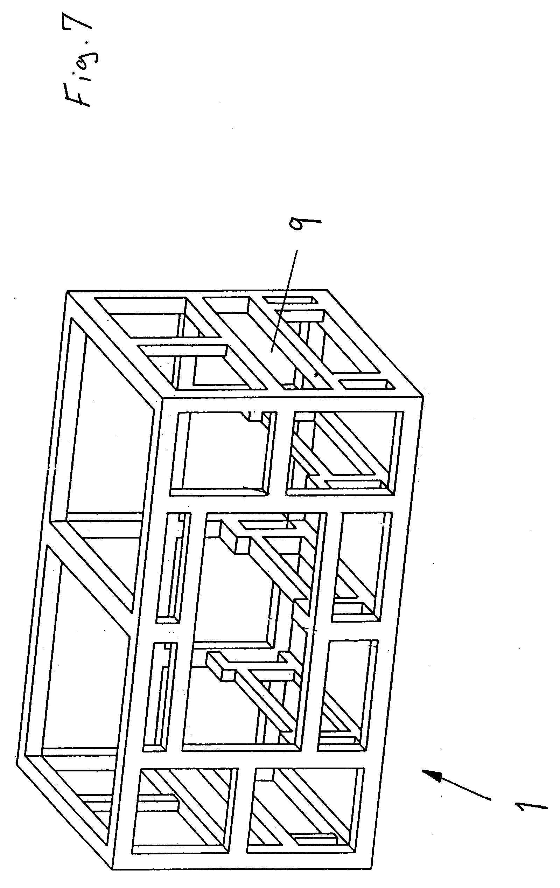

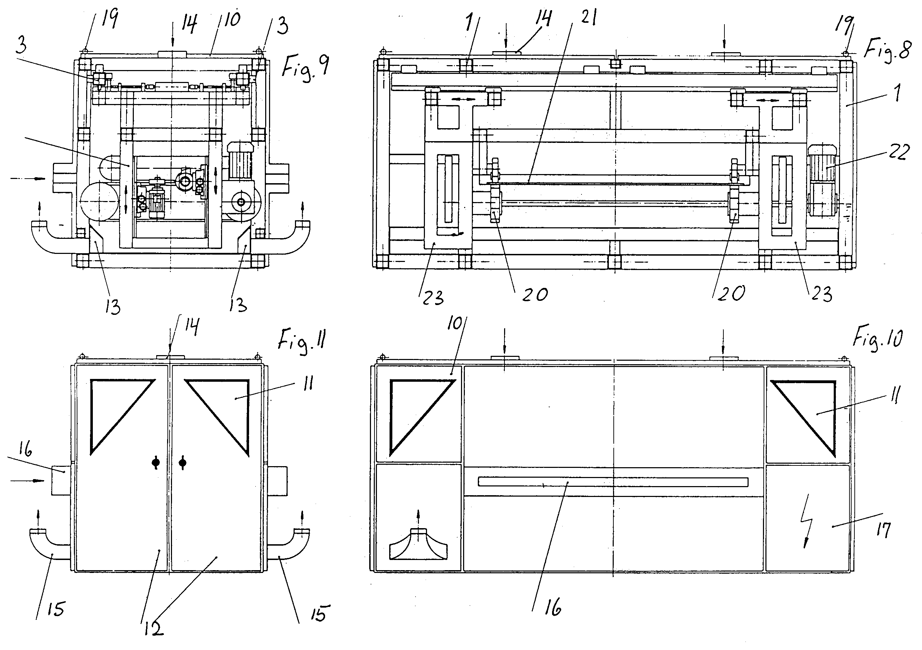

Die Figuren 1 bis 6 zeigen ein Bearbeitungszentrum, das einen als Portalsäge ausgebildeten Plattenaufteilautomaten umschließt. Vorgesehen ist ein Rahmenständer 1, der in Figur 7 in Alleinstellung dargestellt ist und den Plattenaufteilautomaten wie ein Hüllkörper allseitig umschließt. Der Rahmenständer 1 ist als selbsttragende Fachwerkskonstruktion sowie als tragendes Maschinengerüst ausgebildet.

Der von dem Rahmenständer 1 umschlossene Plattenaufteilautomat ist lediglich schematisch dargestellt. Vorgesehen ist ein Portal 2, das an oberen Führungsträgern 3 verschiebbar geführt ist, die über nicht näher dargestellte Befestigungs- und Justierelemente im Rahmenständer 1 an diesem befestigt sind. An dem Portal 2 hängt ein hin- und herverfahrbares Sägeaggregat 4 mit einem Sägeblatt 5. Angedeutet ist ferner ein ein Plattenpaket 6 aufnehmender Arbeitstisch 7, der auf unteren Führungsträgern 8 horizontal verschiebbar gelagert ist und durch eine stirnseitige Öffnung 9 des Rahmenständers 1 ausgefahren werden kann, wie es Figur 1 in strichpunktierter Darstellung zeigt. Auch die unteren Führungsträger 8 sind über Befestigungs- und Justierelemente im Innenraum des Rahmenständers 1 an diesem befestigt.

Der Rahmenständer 1 ist allseitig verkleidet, wobei die Verkleidung durch Schallschutzkassetten 10 gebildet sein kann. Figur 7 macht deutlich, daß der Rahmenständer 1 allseitig Montage- und Serviceöffnungen bildet. Hierfür sind in der Verkleidung des Rahmenständers 1 Sichtfenster 11, die doppeltverglast sein können, zur Produktionsüberwachung sowie Türen 12 durch Durchführung eines Werkzeugwechsels oder von Servicearbeiten vorgesehen.

In den Rahmenständer 1 sind Absaugkanäle 13, ein Zuluftanschluß 14 sowie ein Absauganschluß 15 für eine staubfreie Maschinenumgebung und Energie sparende Späneentsorgung integriert. Die Figuren 1 und 6 lassen eine Schallschutzschleuse 16 erkennen, mit der die stirnseitige Öffnung 9 des Rahmenständers 1, also die Durchtrittöffnung für den Arbeitstisch 7 verschlossen werden kann.

Der Rahmenständer 1 umschließt ferner ein nur schematisch angedeutetes Steuerungsteil 17, zum Beispiel eine Vorschubsantriebseinheit 18 für das Portal 2 und die Versorgungsleitungen für Elektrik, Pneumatik oder dergleichen. Um das Bearbeitungszentrum wie einen Container befördern zu können, sind in den Rahmenständer 1 Aufnahmen 19 integriert.

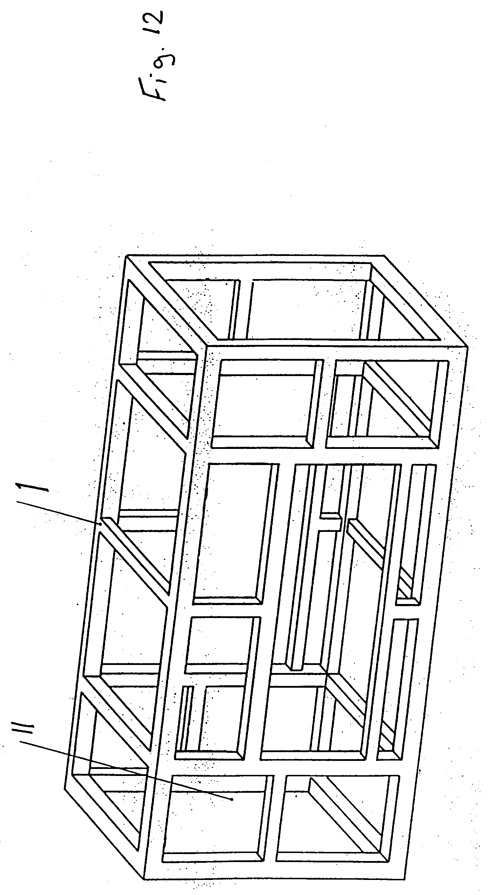

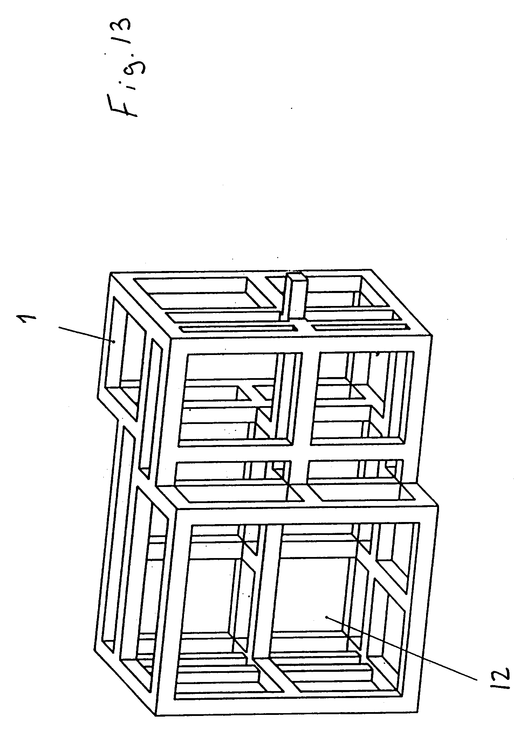

Das in den Figuren 8 bis 11 dargestellte Bearbeitungszentrum umschließt einen Doppelendprofiler und ist ferner geeignet zur Aufnahme eines Zapfen-, Schlitz- und Bohrautomaten. Auch hier ist die Bearbeitungsstation nur schematisch angedeutet. Vorgesehen sind Führungs- und Transporteinrichtungen 20, zwischen denen ein plattenförmiges Werkstück 21 quer zum Bearbeitungszentrum gefördert wird. Auch hier ist der in der Vorderseite der Verkleidung vorgesehene Ein- bzw. Austritt für das plattenförmige Werkstück 21 durch eine Schallschutzschleuse 16 verschließbar. Der in Figur 12 dargestellte Rahmenständer 1 umschließt ferner einen Antrieb 22 für die Führungs- und Transporteinrichtungen 20. Die eigentliche Bearbeitungsstation ist mit 23 bezeichnet und ist mit einer nicht näher dargestellten Werkzeugwechselstation zum Besäumen, Fräsen, Trennen, Profilieren, Nuten, Bohren oder dergleichen versehen.

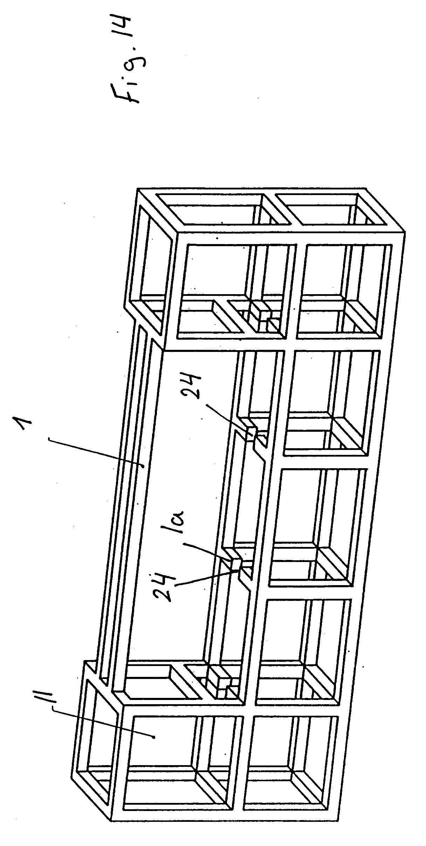

Figur 13 zeigt einen weiterhin abgewandelten Rahmenständer 1, der zur Aufnahme eines Kehl- oder Profilierautomaten bestimmt ist.

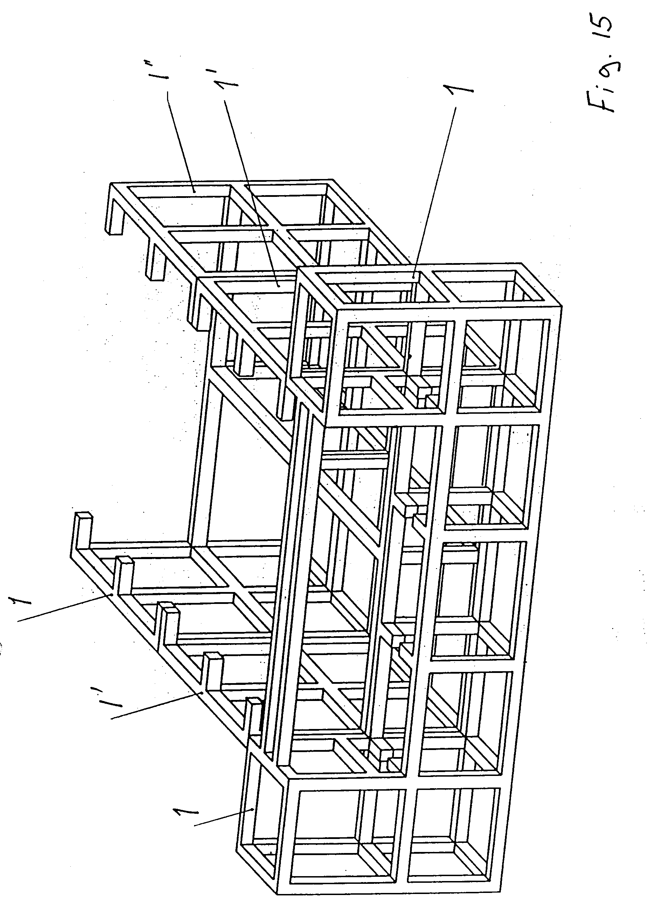

Figur 14 zeigt ein Rahmenteil 1, das zur Aufnahme des Schnittteils eines als Untertischsäge ausgebildeten Plattenaufteilautomaten bestimmt ist. Erkennbar ist ein zwischen Rahmenständerprofilen 1a vorgesehener Spalt 24 für den Durchtritt einer nicht näher dargestellten Untertischsäge.

Figur 15 zeigt den Rahmenständer 1 gemäß Figur 14, der mit zwei zur Aufnahme eines Plattentisches bestimmten Rahmenständern 1' und 1'' verschraubt ist.

## Patentansprüche

1. Holzbearbeitungsmaschine zur spanenden Bearbeitung insbesondere plattenförmiger Werkstücke (6; 21), mit einem Rahmenständer (1) in Form einer Hüllkörperkonstruktion, die als selbsttragendes Fachwerk ausgebildet ist und eine Bearbeitungszelle bzw. einen Arbeitsraum komplett umschließt, Maschinenbetten und -ständer, Führungs- und Transportsysteme (3, 8; 20, 22), Bearbeitungsstationen (23) und dergleichen aufnimmt und hierfür Befestigungsflächen und -bohrungen aufweist, wobei der Rahmenständer (1) eine stirnseitige Öffnung (9) für einen Arbeitstisch (7) oder ein plattenförmiges Werkstück (21), eine allseitige Verkleidung mit Schallschutzelementen (10), Sichtfenster (11) zur Produktionsüberwachung und/oder Türen (12) zur Durchführung eines Werkzeugwechsels, von Servicearbeiten oder dergleichen sowie Absaugkanäle (13) aufweist, **gekennzeichnet durch** folgende Merkmale:
a) die Hüllkörperkonstruktion ist als tragendes Maschinengerüst ausgebildet;
b) es ist eine Schallschutzschleuse (16) zum Verschließen der stirnseitigen Öffnung (9) vorgesehen;
c) die Absaugkanäle (13) sind in den Rahmenständer (1) integriert;
d) der Rahmenständer (1) weist Zuluft- und Absauganschlüsse (14, 15) auf.

2. Maschine nach Anspruch 1, **dadurch gekennzeichnet, daß** der Rahmenständer (1) als Schweißkonstruktion in Hohlkörperbauweise ausgebildet ist.

3. Maschine nach Anspruch 2, **dadurch gekennzeichnet, daß** die den Rahmenständer (1) bildende Fachwerkkonstruktion aus Hohiprofilen besteht.

4. Maschine nach Anspruch 3, **dadurch gekennzeichnet, daß** in den Hohlprofilen Versorgungsleitungen für Elektrik, Pneumatik oder dergleichen verlegt sind.

5. Maschine nach einem der vorhergehenden Ansprüche, **dadurch gekennzeichnet, daß** in den Rahmenständer (1) seinen Transport ermöglichende Aufnahmen (19) integriert ist.

6. Maschine nach einem der vorhergehenden Ansprüche, **dadurch gekennzeichnet, daß** der Rahmenständer (1) in Container-Bauweise erstellt ist.

7. Maschine nach einem der vorhergehenden Ansprüche, **gekennzeichnet durch** mehrere miteinander verschraubte Rahmenständer (1, 1', 1'').

## Claims

1. Wood-processing machine for the cutting-type processing of, in particular, board-shaped workpieces (6; 21), with a frame stand (1) in the form of an encasing body structure which is constructed as a self-supporting latticework and completely encloses a processing cell or working space, receives machine beds and machine stands, guiding and transporting systems (3, 8; 20, 22), processing stations (23) and the like and has attachment faces and attachment bores for this purpose, the frame stand (1) having an opening (9) on the front face for a workbench (7) or a board-shaped workpiece (21), sheathing on all sides with sound-proofing elements (10), viewing windows (11) for monitoring production and/or doors (12) for performing a tool-changing operation, servicing work or the like, and also extractor ducts (13),
characterised by the following features:
a) the encasing body structure is constructed as a load-bearing machine framework;
b) a sound-proofing lock (16) is provided for closing the opening (9) on the front face;
c) the extractor ducts (13) are integrated into the frame stand (1);
d) the frame stand (1) has inlet air and extractor connections (14, 15).

2. Machine according to claim 1, characterised in that the frame stand (1) is constructed as a welded structure by the hollow-body method of construction.

3. Machine according to claim 2, characterised in that the latticework structure forming the frame stand (1) consists of hollow profiles.

4. Machine according to claim 3, characterised in that supply lines for electrics, pneumatics or the like are laid in the hollow profiles.

5. Machine according to one of the preceding claims, characterised in that pick-up devices (19) permitting its transport are integrated into the frame stand (1).

6. Machine according to one of the preceding claims, characterised in that the frame stand (1) is built by the container method of construction.

7. Machine according to one of the preceding claims, characterised by a number of frame stands (1, 1', 1'') bolted to one another.

## Revendications

1. Machine de travail du bois pour travailler avec production de copeaux en particulier des ébauches (6; 21) en forme de plaque, la machine comprenant un cadre-socle (1) sous forme d'une construction de type squelette, qui est réalisé en tant qu'établi autoportant et englobe complètement un poste d'usinage respectivement un espace de travail, et contenant des socles et bâtis de machines, des systèmes de guidage et de transport (3, 8; 20, 22), des stations d'usinage (23) et analogues, et présentant à cet effet des surfaces et des alésages de fixation, le cadre-socle (1) présentant une ouverture frontale (9) pour une table de travail (7) ou une ébauche en forme de plaque (21), un habillage périphérique comportant des éléments insonorisants (10), des fenêtres d'inspection (11) pour surveiller la production et/ou des portes (12) pour effectuer un changement d'outils, de travaux de services et analogues ainsi que des canaux d'évacuation (13), caractérisée par les particularités suivantes:
a- la construction du type squelette est réalisée sous forme de socles de machine porteurs;
b- il est prévu un sas insonorisant (16) pour fermer l'ouverture frontale (9);
c- les canaux d'évacuation (13) sont intégrés dans le cadre-socle (1);
d- le cadre-socle (1) présente des raccords (14, 15) d'amenée d'air et d'évacuation.

2. Machine selon la revendication 1, caractérisée en ce que le cadre-socle (1) est réalisé sous la forme d'une construction soudée dans le mode de construction en corps creux.

3. Machine selon la revendication 2, caractérisée en ce que la structure d'établi constituant le cadre-socle (1) est constituée de profilés creux.

4. Machine selon la revendication 3, caractérisée en ce que des conduits d'alimentation pour l'électricité, le pneumatique ou analogue sont installés dans les profilés creux.

5. Machine selon l'une des revendications précédentes, caractérisée en ce que des points de préhension (19) sont intégrés dans le cadre-socle (1) pour permettre son transport.

6. Machine selon l'une des revendications précédentes, caractérisée en ce que le cadre-socle (1) est agencé selon un mode de construction en conteneur.

7. Machine selon l'une des revendications précédentes, caractérisée par plusieurs cadres-socle (1, 1', 1'') vissés les uns aux autres.
